# EUROPEAN PATENT APPLICATION

(11) **EP 2 722 745 A1**
(43) Date of publication of application: **23.04.2014**
(21) Application number: 12188844.0
(22) Date of filing: 17.10.2012
(51) Int. Cl.: G06F 3/0488

(54) **A method for operating a gesture-controlled graphical user interface**

(71) Applicant: Advanced Digital Broadcast S.A., 1292 Chambesy (CH)
(72) Inventor: Wielgosz, Marcin, 65-119 Zielona Gora (PL)
(74) Representative: Pawlowski, Adam

(57) **Abstract**

A method for operating a gesture-controlled graphical user interface for a device with a display screen interface (106), the method comprising the steps of receiving (301) an input gesture (G1-G8), via the gesture-controlled input interface (101), generating a signal (303) comprising a graphical object (400) corresponding to the device functionality associated with the received input gesture (G1-G8). The generated graphical object (400) has at least part of its border (401-408) resembling the shape of the received input gesture (G1-G8).

## Description

The present invention relates to gesture-controlled user interfaces for devices outputting a graphical user interface by means of an internal or an external display screen.

Gesture-controlled user interfaces become more and more popular for navigating various types of devices. In contrast to standard controls, such as a keyboard, a navigation pad or a joystick, gesture-controlled user interfaces provide much wider flexibility, including the possibility to define unlimited number of gestures that can be input by the user. However, the user, in particular a beginner in using a particular device, is usually able to learn only a small number of gestures and can be unaware of the other gestures that are available. Moreover, sophisticated applications handled by the device may require different gestures to be performed depending on the current context of the application, which further complicates the user interface.

Prior art graphical user interfaces (GUI) most frequently allow a user to define gestures and assign the defined gestures to selected events in the graphical user interface software. By means of such arrangement the user learns and remembers the defined gestures. However, this requires time, some expertise and good memory as there may be dozens of gestures per GUI. Hence the prior art systems are complex and not intuitive, especially when a situation is considered where there are multiple users of the prior art system.

Moreover, when an inexperienced user starts to use a gesture-controlled interface, the user needs to spend considerable amount of time to learn the specific way of inputting the gestures. In addition to the vast amount of gestures that can be input via the interface, this may result in a relatively long time necessary for the user to learn the interface.

Further, in the initial period some commands may be input inaccurately, resulting in unintentional activation of unnecessary commands.

It would be therefore desirable to improve a gesture-controlled user interface to increase its usability and to improve the speed of learning to efficiently use the graphical user interface.

The object of the invention is a method for operating a gesture-controlled graphical user interface for a device with a display screen interface, the method comprising the steps of receiving an input gesture, via the gesture-controlled input interface, generating a signal comprising a graphical object corresponding to the device functionality associated with the received input gesture. The method is **characterized in that** the generated graphical object has at least part of its border resembling the shape of the received input gesture.

Preferably, the border of the graphical object is selected from a plurality of borders predefined for particular input gestures.

Preferably, the shape of the border of the graphical object is generated after receiving the input gesture in accordance with the shape of the received input gesture.

Preferably, the graphical object is displayed as an OSD layer or a pop-up window.

Preferably, the graphical object is displayed on top of a currently active background layer.

Preferably, the border is at least one of: a border offset from all borders of the display screen, a border adjacent to one border of the display screen, a border adjacent to two borders of the display screen, a border adjacent to three borders of the display screen.

Preferably, the shape of the received input gesture comprises at least one of: a horizontal line, a vertical line, a slanted line, a wave-like line, a zig-zag line, a circle.

Preferably, the graphical object is displayed in an animated manner, wherein the animation is made along a line corresponding to the shape of the received input gesture.

Preferably, the gestures are predefined in a database comprising information on a gesture identifier, device functionality, gesture shape and object border.

Preferably, the database further comprises application-specific gestures input to the database upon execution of a software application and deleted from the database upon stopping of the application.

Another object of the present invention is a device having a gesture input interface and a display screen interface, wherein the device comprises computer-implemented means for executing the method according to the invention.

Another object of the invention is a computer program comprising program code means for performing all the steps of the method according to the invention when said program is run on a computer, as well as a computer readable medium storing computer-executable instructions performing all the steps of the method according to the invention when executed on a computer.

The object of the invention is shown by means of exemplary embodiment on a drawing, in which:
Fig. 1 shows schematically a structure of a device utilizing the gesture-controlled user interface,
Fig. 2 shows schematically the contents of a gestures database,
Fig. 3 shows the steps of a method of operation of the GUI display controller,
Figs. 4A-4H show exemplary display screens with graphical objects having borders corresponding to different gestures,
Figs. 5A-5E show exemplary display screens with different embodiments of borders corresponding to the same gesture,
Figs. 6A-6B show schematically animation of graphical object display.

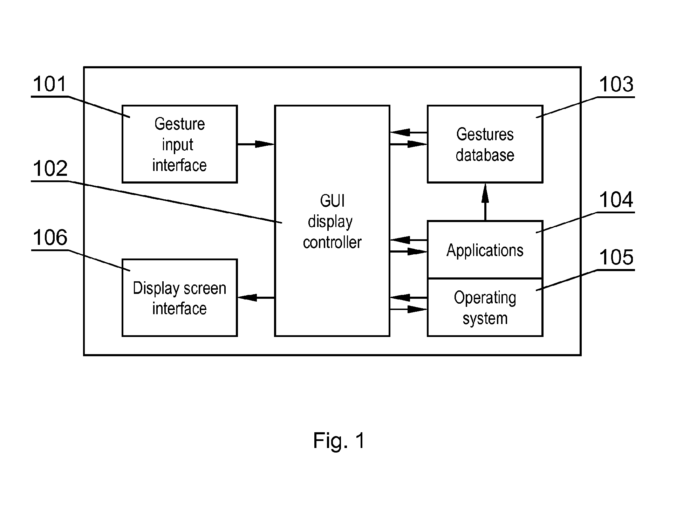

Fig. 1 shows schematically a structure of a device 100 utilizing the gesture-controlled graphical user interface. The device comprises a gesture input interface 101 configured to receive gestures from the user and to detect the shapes of the gestures. The gesture input interface 101 may receive gestures from different devices such as a touch screen, a mouse, a remote control unit or the like. The touch screen (also known as a touch-sensitive display) may be of any suitable type, such as a capacitive, resistive, infrared, or surface acoustic wave (SAW) touch-sensitive display, as known in the art. In another embodiment, there may be a remote control unit that may comprise only the touch screen and communicate with the gesture input interface 101.

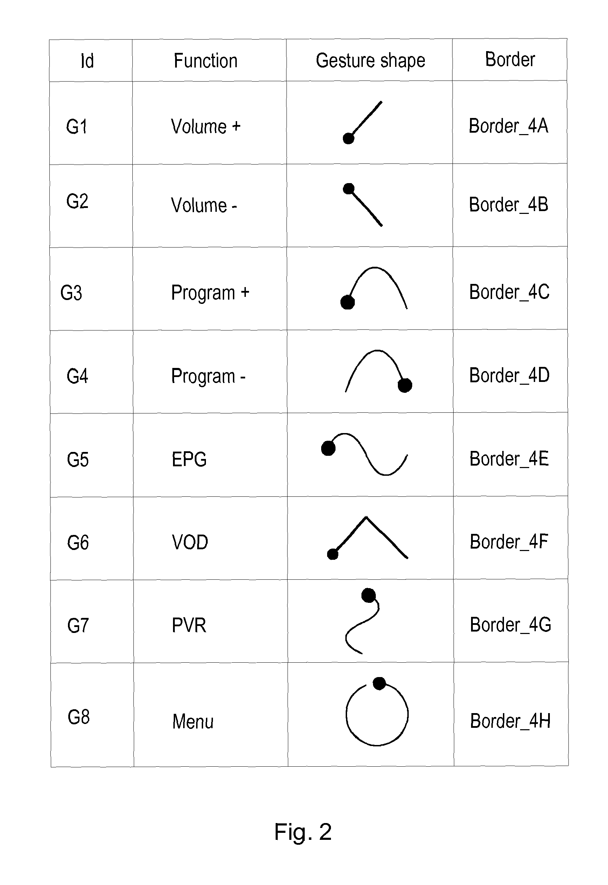

A GUI (Graphical User Interface) display controller 102 is configured to operate the method according to the invention, i.e. to control the display of various graphical objects on the screen in response to the gesture received via the interface 101. The graphical objects may be displayed as OSD (on-screen display) layers, pop-up windows or any other suitable GUI object, etc. The GUI display controller 102 uses a gestures database 103, described in details with reference to Fig. 2. The gestures database 103 will typically be stored in a non-volatile memory accessible to the GUI display controller 102. The non-volatile memory may be internal or external, for example accessible by means of a network connection.

The operation of the device 100 is controlled by an operating system 104 and various applications 105. The device has a display interface 106, such as an embedded display screen, or an output interface for connecting with an external display screen, on which graphical information can be presented.

Fig. 2 shows schematically exemplary contents of a portion of a gestures database 103 for a television receiver. Each gesture comprises an identifier, an assigned function to be invoked by the gesture and a gesture descriptor determining the shape of the gesture and an object border associated with the given gesture.

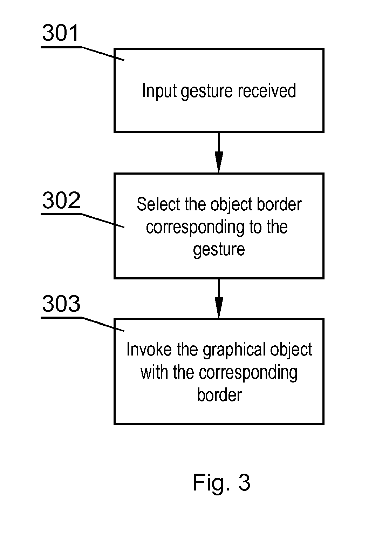

The gestures database 103 may comprise dozens of gestures, which can be problematic for the user to learn. Therefore, it would be desirable to improve the user experience when invoking the gestures. The hint is provided by the GUI display controller 102 operating the method shown in Fig. 3.

The database 103 may comprise pre-generated gestures defined by the operating system 104 and may be supplemented by additional gestures from applications 105 operated by the operating system 104. Upon starting the application 105, the application may supplement the database 103 with a set of gestures unique for the particular application and reference to functions of the particular application, and after the application is closed, the unique set of gestures may be removed from the database.

The gesture descriptor, identifies respective movements (i.e. actions executed on a controller from which the gesture input interface 101 receives data) to be performed by the user in order to correspond to a given gesture. The descriptor may relate to straight-line vectors, curved vectors or other shapes, such as circles, waves, two-handed gestures etc, as known in the art.

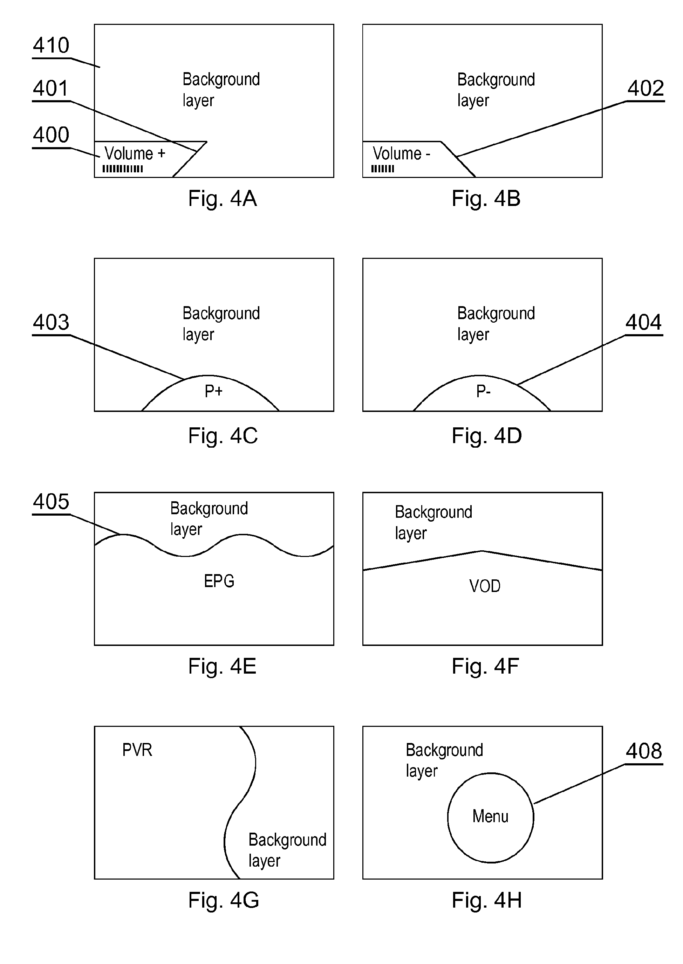

The border is a definition of a border in which a graphical object associated with the given gesture will be displayed upon receiving that gesture. The border shape may be defined as a set of screen coordinates and vectors. In the example provided, border shapes are described corresponding to the exemplary borders shown in Figs. 4A-4H. At least part of the border resembles the shape of the received input gesture.

The GUI display controller 102 is activated in step 301 upon receiving an input gesture via the gesture input interface 101. In step 302 a border corresponding to the received input gesture is selected from the gestures database 103. In step 303, a signal comprising a graphical object 400 corresponding to the device functionality associated with the received input gesture is generated, which results in displaying the object in the determined border on the display screen, on top of the currently active background layer. The currently active background layer may be e.g. a currently watched video signal in case of a tv receiver or represent any screen contents presently active on screen.

Alternatively, in step 302 the border of the graphical object 400 can be generated instead of being read from the database. The border may be generated in accordance with the shape of the received input gesture G1-G8.

Figs. 4A-4H show graphical objects displayed in different borders, depending on the received input gestures.

In a typical graphical user interface the graphical objects corresponding to a particular device functionality are displayed in borders having typically a form of a rectangle. The border may be function-dependent, for example functions requiring less space for the displayed graphical object (such as indicating the current volume level) may be displayed in rectangular borders smaller than functions requiring more space for displayed graphical object (such as indicating the current program name and program details).

In the graphical user interface according to the present invention, at least part of the border of the displayed graphical objects resembles the shape of the input gesture. For example, the graphical objects 400 of Fig. 4A, 4B have border parts 401, 402 corresponding to the shape of gestures G1, G2. In case of gestures having the same shape and different directions, such as gestures G3, G4, the borders may have the same border parts 403, 404 as shown in Fig. 4C, 4D. To distinguish between gestures of the same shape and different directions of input, the graphical objects may have properties other than the border shape defined, such as background color or opacity, which change in the direction corresponding to the gesture (e.g. the color may change from light to dark in direction from the left to the right in Fig. 4C and oppositely in Fig. 4D). As shown in Fig. 4E, the shape of the input gesture may repeat in several parts 405 of the border. In case of gestures which have a shape resembling a closed figure, such as gesture G8, the whole border 408 may have the shape of the gesture.

For example, the graphical user interface may be designed in a Java 7 programming platform. Java 7 allows creating Window of whatever shape as required. A programmer may create circle, triangle, elliptic windows or more complex shapes. In order to do that, one needs to invoke the setShape(Shape shape) method in the Window class.

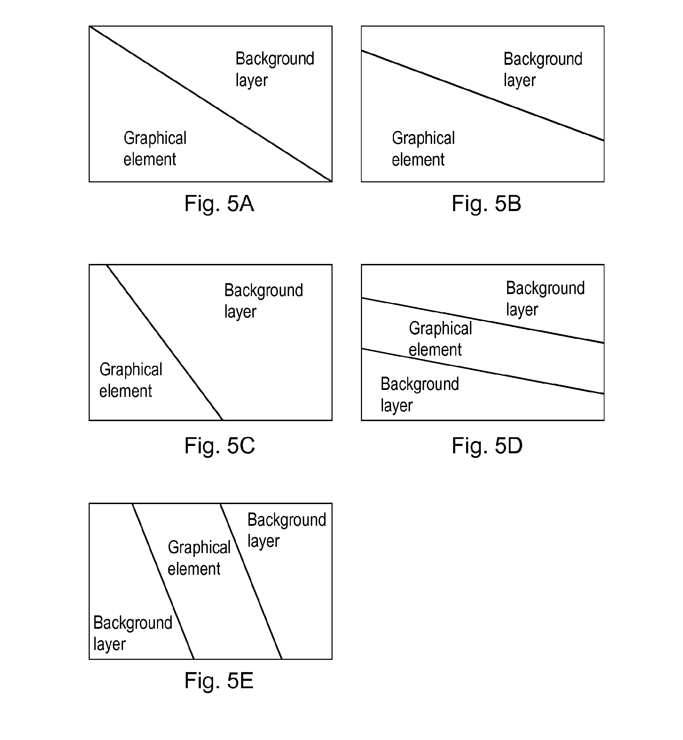

Figs. 5A-5E show different possible borders for the particular gesture G2. The graphical object may cover approximately 50% of the screen as shown in Fig. 5A, or more or less than a half of the top or bottom part of the screen as shown in Fig. 5B, or more or less than a half of the top or bottom part of the screen as shown in Fig. 5C.

The border may be offset from the screen borders, as shown in Fig. 4H. Alternatively, the border may contact one of the screen borders, as shown in Figs. 4C, 4D, or two of the screen borders, as shown in Figs. 4A, 4B, 5A, 5D, 5E, or three of the screen borders, as shown in the other Figures.

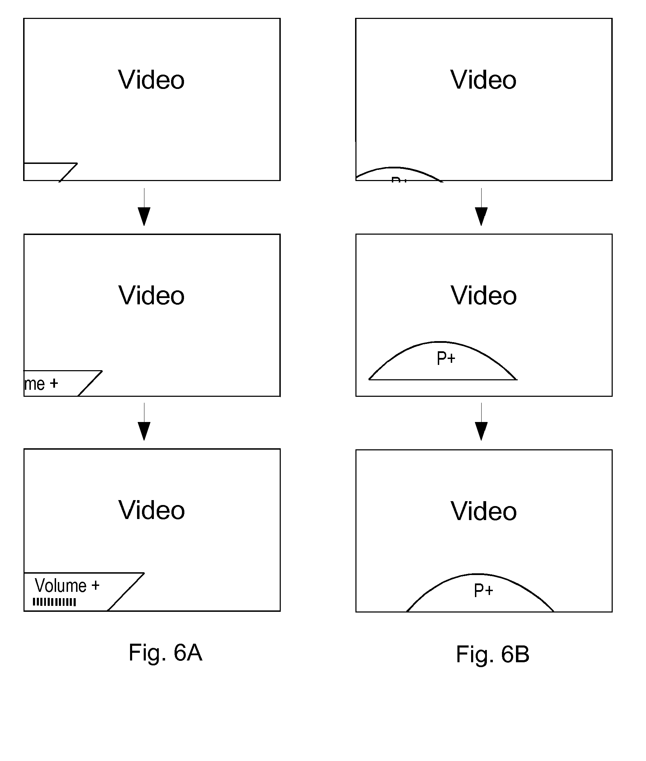

In addition, when the graphical object is to be displayed, it may appear on the screen in an animated manner, wherein the vector of animation corresponds to the shape of the gesture. For example, as shown in Fig. 6A, a graphical object corresponding to the gesture G1 may appear on the screen gradually as moving from the bottom left corner in a top-right direction. As shown in Fig. 6B, a graphical object corresponding to the gesture G3 may appear on the screen gradually and perform a motion along a half-circle line.

Since at least a part of the border of the graphical object resembles the gesture associated with the functionality which corresponds with the graphical object displayed in the border, the user may learn the different gestures to handle the user interface in a more intuitive manner. The user remembers the shape of the border associated with a given graphical object corresponding to the selected functionality, even a functionality that is not used very often, and may more easily recall the gesture that is necessary to invoke that function.

It can be easily recognized, by one skilled in the art, that the aforementioned method for handling the gesture-controlled user interface may be performed and/or controlled by one or more computer programs. Such computer programs are typically executed by utilizing the computing resources of the device. The computer programs can be stored in a non-volatile memory, for example a flash memory or in a volatile memory, for example RAM and are executed by the processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for operating a gesture-controlled graphical user interface for a device with a display screen interface (106), the method comprising the steps of:
- receiving (301) an input gesture (G1-G8), via the gesture-controlled input interface (101),
- generating a signal (303) comprising a graphical object (400) corresponding to the device functionality associated with the received input gesture (G1-G8),
the method being **characterized in that**
- the generated graphical object (400) has at least part of its border (401-408) resembling the shape of the received input gesture (G1-G8).

2. The method according to claim 1, **characterized in that** the border of the graphical object (400) is selected from a plurality of borders predefined for particular input gestures (G1-G8).

3. The method according to claim 1, **characterized in that** the shape of the border of the graphical object (400) is generated after receiving the input gesture (G1-G8) in accordance with the shape of the received input gesture (G1-G8).

4. The method according to claim 1, wherein the graphical object (400) is displayed as an OSD layer or a pop-up window.

5. The method according to claim 1, wherein the graphical object (400) is displayed on top of a currently active background layer.

6. The method according to claim 1, wherein the border (Border_4A-4H) is at least one of: a border offset from all borders of the display screen, a border adjacent to one border of the display screen, a border adjacent to two borders of the display screen, a border adjacent to three borders of the display screen.

7. The method according to claim 1, wherein the shape of the received input gesture comprises at least one of: a horizontal line, a vertical line, a slanted line, a wave-like line, a zig-zag line, a circle.

8. The method according to claim 1, wherein the graphical object (400) is displayed in an animated manner, wherein the animation is made along a line corresponding to the shape of the received input gesture (G1-G8).

9. The method according to claim 1, wherein the gestures are predefined in a database (103) comprising information on a gesture identifier (G1-G8), device functionality, gesture shape and object border (Border_4A-4H).

10. The method according to claim 9, wherein the database further comprises application-specific gestures input to the database upon execution of a software application and deleted from the database upon stopping of the application.

11. A device (100) having a gesture input interface (101) and a display screen interface (106), **characterized in that** it comprises computer-implemented means (102, 103) for executing the method according to any of claims 1-10.

12. A computer program comprising program code means for performing all the steps of the method according to any of claims 1-10 when said program is run on a computer.

13. A computer readable medium storing computer-executable instructions performing all the steps of the method according to any of claims 1-10 when executed on a computer.

## Amended claims

### Amended claims in accordance with Rule 137(2) EPC.

**1.** A method for operating a gesture-controlled graphical user interface for a device with a display screen interface (106), the method comprising the steps of:
- receiving (301) an input gesture (G1-G8), via the gesture-controlled input interface (101),
- generating a signal (303) comprising a graphical object (400) representation corresponding to the device functionality associated with the input gesture (G1-G8),
- wherein the generated graphical object (400) representation, represents a graphical object (400) that has at least part of its border (401-408) resembling the shape of the input gesture (G1-G8);
the method being **characterized in that**
- the graphical object (400) is displayed in an animated manner, wherein the animation is made along a line corresponding to the shape of the received input gesture (G1-G8).

**2.** The method according to claim 1, **characterized in that** the border of the graphical object (400) is selected from a plurality of borders predefined for particular input gestures (G1-G8).

**3.** The method according to claim 1, **characterized in that** the shape of the border of the graphical object (400) is generated after receiving the input gesture (G1-G8) in accordance with the shape of the received input gesture (G1-G8).

**4.** The method according to claim 1, wherein the graphical object (400) is displayed as an OSD layer or a pop-up window.

**5.** The method according to claim 1, wherein the graphical object (400) is displayed on top of a currently active background layer.

**6.** The method according to claim 1, wherein the border (Border_4A-4H) is at least one of: a border offset from all borders of the display screen, a border adjacent to one border of the display screen, a border adjacent to two borders of the display screen, a border adjacent to three borders of the display screen.

**7.** The method according to claim 1, wherein the shape of the received input gesture comprises at least one of: a horizontal line, a vertical line, a slanted line, a wave-like line, a zig-zag line, a circle.

**8.** The method according to claim 1, wherein the gestures are predefined in a database (103) comprising information on a gesture identifier (G1-G8), device functionality, gesture shape and object border (Border_4A-4H).

**9.** The method according to claim 8, wherein the database further comprises application-specific gestures input to the database upon execution of a software application and deleted from the database upon stopping of the application.

**10.** A computer program comprising program code means for performing all the steps of the method according to any of claims 1-9 when said program is run on a computer.

**11.** A computer readable medium storing computer-executable instructions performing all the steps of the method according to any of claims 1-9 when executed on a computer.
